# EUROPEAN PATENT SPECIFICATION

(11) **EP 3 032 666 B1**
(45) Date of publication and mention of the grant of the patent: **11.09.2019**
(21) Application number: 14004199.7
(22) Date of filing: 12.12.2014
(51) Int. Cl.: H02B 13/00

(54) **Push lead through for gas insulated medium voltage switchgear**
Druckdurchführung für gasisolierte Mittelspannungsschaltanlage
Dispositif de traversée à poussée pour commutation de tension moyenne isolée du gaz

(43) Date of publication of application: 15.06.2016
(73) Proprietor: ABB Schweiz AG, 5400 Baden (CH)
(72) Inventor: Messadi, Mohamed, 40237 Düsseldorf (DE); Hensel, Jürgen, 40882 Ratingen (DE); Mildes, Hartmut, 40878 Ratingen (DE); Fußbahn, Olaf, 40885 Ratingen (DE)
(74) Representative: Schmidt, Karl Michael

(56) References cited:
- EP-A2- 0 843 330
- CN-U- 203 644 581
- GB-A- 2 078 007

## Description

The Invention relates to a push lead through for gas insulated medium voltage switchgear, according to the preamble of claim 1.

The use of one opening spring for all three phases is state of the art in air insulated switchgears AIS. In that case, no bushing is necessary. On the contrary to that, in gas insulated switchgears GIS there is one lead through for each phase using different types of sealing elements. Normally the opening spring is part of the drive mechanism, the push rod is part of the pole and the lead through is a separate assembly.

In AIS the lead through has a degree of freedom in radial direction. This causes automatically an increase of gas leakage. So the use of push lead throughs for GIS requires gas tightness in all cases. EP 0 843 330 A2 discloses a push lead trough with the features of the preamble of claim 1. The lead trough is a cylindrical element, only be fixed in a first housing wall. The further extension of the cylindrical element is going trough an opening of a further housing wall, but with extended diameter, so that the cylindrical element can decline under high mechanical load.

For that, the object of the invention is, that radial stress on sealing has to be avoided, and number of sealing elements have to be reduced. These efforts tends to better tightness.

So the invention is that the push lead trough is fixed with a bearing and sealing element at the outer side of the switchgear housing wall, and a futher guiding means from inside the housing, in order to prevent radial displacement during axial push rod movement. By that tilting momentum is compensated in that way, that no radial displacement is possible.

The opening spring is not part of the linkage system in known systems, and has therefore to be assembled separately. By this invention the spring force is applied coaxial to transmission. Reduction from three to only one opening spring, which additionally results in less assembling time.

So the problem was solved by the invention.

Further advantageous embodiments are described in the dependent claims. According to the invention, the further guiding means are fixed on a support plate with a further guide through opening in such, that the support plate is fixed to the inner side of the switchgear housing at the aforesaid opening in the housing with a distance (R) from the housing wall itself, in order to block radial displacement by a mechanically blocking of a momentum of tilt.

In a further advantageous embodiment is provided, that in the guide through opening of the support plate is fixed a cuplike element with its open side orientated towards the inner room of the switchgear housing, and that the cuplike element holds with its bottom side one end of an axial spring, wherin the springs' long axis is parallel to the rod, in such, that the rod is surrounded by the spring. So the spring a such has an also displacement safe position.

According to the invention, a holding part for the other end of the spring is fixed adjacently to the aforesaid end of the spring in the cuplike element, and that the holding part is provided with a ring groove in which the other end of the spring is positioned.

Furthermore is advantageous, that the complete push lead through with all aforesaid elements and parts is fixed in the switchgear housing wall in such, that it is fixed under active extension force of the aforesaid spring.

An embodiment of the invention is shown in the drawing.

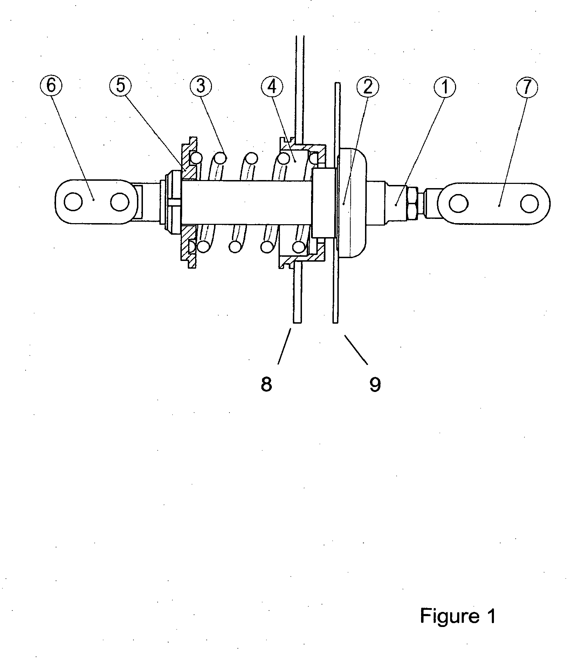

Figure 1: side view on the push lead through
Figure 2: perspective view
Figure 3: Detail spring positions
Figure 4: encapsulated spring

A gastight push lead through consists of a push rod 1, a bushing including bearing and sealing 2, fixed from the outer side of the switchgear housing wall 9, an opening spring 3, two spring holding parts 4, 5 and two jointed connections between drive mechanism, holding part 7, and pole-compartment, holding part 6.

The cuplike holding part 4 is fixed at the edge line to an opening in the support plate 8. By that the spring is positionend deeply inside this cuplike holding part 4, so that tilting of the spring axis is prevented.

The bearing inside the bushing allows only a movement of the push rod in axial direction. The bushing itself is fixed in all directions. Thus a lateral movement will be taken by the links 6, 7 and the radial sealing's inside the bushing have to perform only an axial movement.

The opening spring can be preloaded in a jig. After pressing it between the two holding parts 6, 7 a half shell can be set to keep the spring in required length. It can be used a second half shell and clips together. Thus the outer diameter is shaped in a way, that the half shell can be stick easily.

A self-locking nut can screwed on one side to hold the spring for operation mode. On the other side the holding part will be put in the housing without any fixation method. This assembly is stockable.

The groove in holding part 5 prevents buckling of the spring.

An eye screw connects push rod with links on drive side. It is additional fixed with a nut. A jaw size on push rod allow putting an open-jaw wrench or another tool to block the rotation of the push rod during fasten the nut. Thereby no torque is applied on link connections.

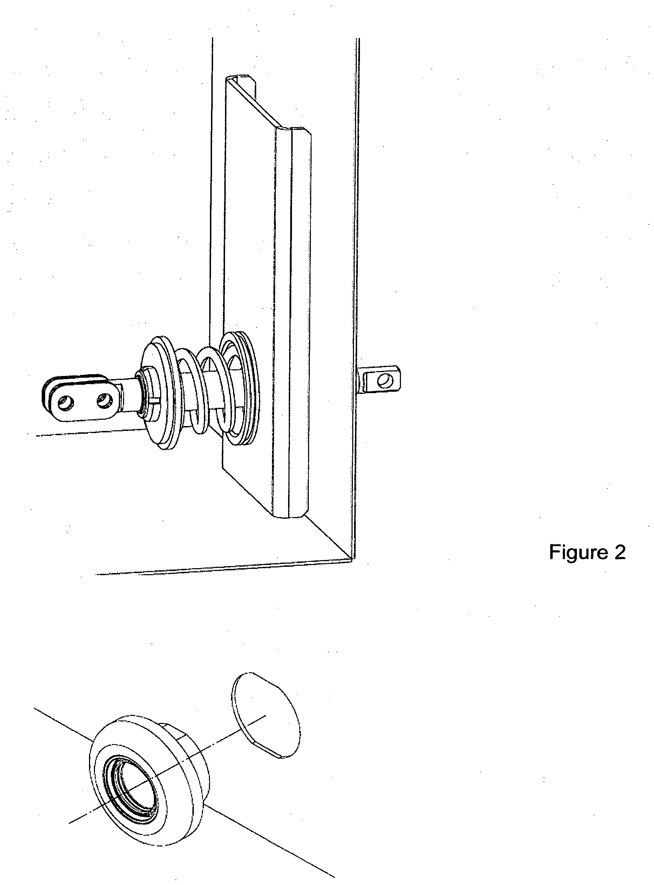

Figure 2 shows a perspective view on the arranged push lead through with the rod. By that is visible in detail, how the lead through elements, spring, spring holding parts are arranged inside the switchgear housing. The support plate is fixed at the inner side of the wall of the switchgear housing, for example by welding.

So the support plate is fixed and prevents each tilting of the push rod axis. The opening in the wall of the switchgear housing has an inner not round contour which is adapted complementarily to the outer line of a spigot at the bushing and sealing element, in order to block twisting.

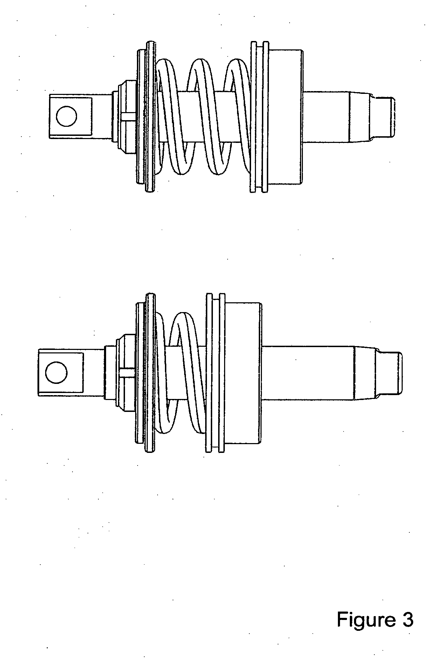

Figure 3 shows two possible elongation positions of the opening spring.

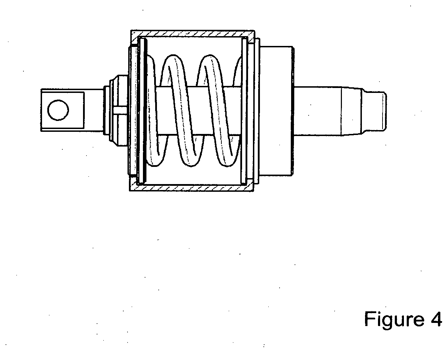

Figure 4 shows a possible embodiment, where the opening spring is encapsulated between the two spring holding parts.

### Position numbering

- 1: push rod
- 2: bearing and sealing element
- 3: opening spring
- 4: cuplike spring holding part
- 5: spring holding part with groove
- 6: jointed connection
- 7: jointed connection
- 8: support plate
- 9: wall of the switchgear housing

## Claims

1. A push lead through for a gas insulated medium voltage switchgear housing, with an axially movable push rod (1) guided through the lead through and a gastight bushing (2) with bearing and sealing element, to be located in an opening in the medium voltage switchgear housing wall, **wherein** the push rod (1) is configured to be fixed with the bearing and sealing element (2) at the outer side of the switchgear housing wall (9), and further guiding means from inside the housing (4, 5), in order to prevent radial displacement during axial push rod (1) movement, **characterized in that** the further guiding means (4,5) are fixed on a support plate (8) with a further guide through opening such that the support plate is configured to be fixed to the inner side of the switchgear housing at the aforesaid opening in the housing (9) with a distance (R) from the housing wall itself, in order to block radial displacement by a mechanically blocking of a momentum of tilt, that in the guide through opening of the support plate (8) is fixed a cuplike holding part (4) holding one end of an axial spring (3) that surrounds the push rod (1) and that a holding part (5) for the other end of the spring (3) is fixed adjacently to the aforesaid end of the spring in the cuplike holding part (4), and that the holding part (5) is provided with a ring groove in which the other end of the spring is positioned.

2. A push lead through, according to claim 1,
**characterized in**
**that** in the guide through opening of the support plate (8) is fixed a cuplike spring holding part (4) with its open side orientated towards the inner room of the switchgear housing, and that the cuplike spring holding part holds with its bottom side one end of an axial spring, wherein the spings long axis is parallel to the rod (1), in such, that the rod is surrounded by the spring.

3. A push lead through, according to one of the aforesaid claims,
**characterized in**
**that** the complete push lead through with all aforesaid elements and parts is fixed in the switchgear housing wall in such, that it is fixed under active extension force of the aforesaid spring.

## Patentansprüche

1. Schubdurchführung für ein gasisoliertes Mittelspannungsschaltgerätegehäuse mit einer durch die Durchführung geführten axial beweglichen Schubstange (1) und
eine gasdichte Buchse (2) mit Lager- und Dichtelement, die in einer Öffnung in der Mittelspannungsschaltgerätegehäusewand platziert werden sollen, wobei die Schubstange (1) dazu ausgelegt ist, mit dem Lager- und Dichtelement (2) an der Außenseite der Schaltgerätegehäusewand (9) befestigt zu werden, und ferner Führungsmittel von dem Inneren des Gehäuses (4, 5), um radiale Versetzung während Bewegung der axialen Schubstange (1) zu verhindern,
**dadurch gekennzeichnet,**
**dass** die weiteren Führungsmittel (4,5) auf einer Stützplatte (8) mit einer weiteren Durchführungsöffnung derart befestigt sind, dass die Stützplatte dazu ausgelegt ist, an der vorgenannten Öffnung in dem Gehäuse (9) mit einem Abstand (R) von der Gehäusewand selbst an der Innenseite des Schaltgerätegehäuses befestigt zu werden, um radiale Versetzung durch ein mechanisches Blockieren eines Kippmoments zu blockieren, dass in der Durchführungsöffnung der Stützplatte (8) ein becherartiges Halteteil (4) befestigt ist, das ein Ende einer Axialfeder (3) hält, die die Schubstange (1) umgibt,
und **dass** ein Halteteil (5) für das andere Ende der Feder (3) angrenzend an das vorgenannte Ende der Feder in dem becherartigen Halteteil (4) befestigt ist, und dass das Halteteil (5) mit einer Ringnut, in der das andere Ende der Feder positioniert ist, bereitgestellt wird.

2. Schubdurchführung gemäß Anspruch 1,
**dadurch gekennzeichnet,**
**dass** in der Durchführungsöffnung der Stützplatte (8) ein becherartiges Federhalteteil (4) befestigt ist, dessen offene Seite zu dem Innenraum des Schaltgerätegehäuses hin orientiert ist, und dass das becherartige Federhalteteil mit seiner Unterseite ein Ende einer Axialfeder hält, wobei die Längsachse der Feder zu der Stange (1) derart parallel ist, dass die Stange durch die Feder umgeben ist.

3. Schubdurchführung nach einem der vorgenannten Ansprüche,
**dadurch gekennzeichnet,**
**dass** die komplette Schubdurchführung mit allen vorgenannten Elementen und Teilen in der Schaltgerätegehäusewand derart befestigt ist, dass sie unter aktiver Dehnungskraft der vorgenannten Feder befestigt ist.

## Revendications

1. Dispositif de traversée à poussée pour un boîtier de dispositif de commutation de tension moyenne isolé au gaz, comprenant une tige de poussée axialement mobile (1) guidée à travers le dispositif de traversée et une douille étanche au gaz (2) comprenant un élément de support et d'étanchéité, à placer dans une ouverture dans la paroi du boîtier de dispositif de commutation de tension moyenne, dans lequel la tige de poussée (1) est configurée de manière à être fixée avec l'élément de support et d'étanchéité (2) sur le côté extérieur de la paroi du boîtier de dispositif de commutation (9), et des moyens de guidage supplémentaires s'étendant depuis l'intérieur du boîtier (4, 5), dans le but d'empêcher un déplacement radial pendant un déplacement axial de la tige de poussée (1),
**caractérisé en ce que** les moyens de guidage supplémentaires (4, 5) sont fixés sur une plaque de support (8) avec une ouverture traversante de guidage supplémentaire, de telle sorte que la plaque de support soit configurée de manière à être fixée au côté intérieur du boîtier de dispositif de commutation au niveau de l'ouverture précitée dans le boîtier (9) à une certaine distance (R) de la paroi du boîtier elle-même, dans le but de bloquer tout déplacement radial par un blocage mécanique d'une impulsion d'inclinaison, et **en ce que** l'ouverture traversante de guidage de la plaque de support (8) est fixée à une partie de support en forme de coupe (4) qui supporte une première extrémité d'un ressort axial (3) qui entoure la tige de poussée (1), et **en ce qu'**une partie de support (5) pour l'autre extrémité du ressort (3) est fixée de façon adjacente à l'extrémité précitée du ressort dans la partie de support en forme de coupe (4), et **en ce que** la partie de support (5) est pourvue d'une rainure annulaire dans laquelle l'autre extrémité du ressort est positionnée.

2. Dispositif de traversée à poussée selon la revendication 1, **caractérisé en ce que** l'ouverture traversante de guidage de la plaque de support (8) est fixée à une partie de support de ressort en forme de coupe (4) dont le côté ouvert est orienté en direction de la chambre intérieure du boîtier de dispositif de commutation, et **en ce que** la partie de support de ressort en forme de coupe supporte avec son côté inférieur une première extrémité d'un ressort axial, dans lequel l'axe long du ressort est parallèle à la tige (1), de telle sorte que la tige soit entourée par le ressort.

3. Dispositif de traversée à poussée selon l'une des revendications précédentes, **caractérisé en ce que** le dispositif de traversée à poussée complet pourvu de tous les éléments et parties précités est fixé dans la paroi du boîtier de dispositif de commutation de telle sorte qu'il soit fixé sous une force d'extension active du ressort précité.
